## Europäisches Patentamt
## European Patent Office
## Office européen des brevets

(11) Veröffentlichungsnummer: **0 308 743**
**A1**

## (12) EUROPÄISCHE PATENTANMELDUNG

(21) Anmeldenummer: **88114749.0**

(22) Anmeldetag: **09.09.88**

(51) Int. Cl.⁴: **C08L 71/04 , C08L 23/08 , C08L 25/00 , C08L 53/02**

(30) Priorität: **18.09.87 DE 3731457**

(43) Veröffentlichungstag der Anmeldung:
**29.03.89 Patentblatt 89/13**

(84) Benannte Vertragsstaaten:
**BE DE FR GB NL**

(71) Anmelder: **BASF Aktiengesellschaft**
**Carl-Bosch-Strasse 38**
**D-6700 Ludwigshafen(DE)**

(72) Erfinder: **Ostermayer, Bertram, Dr.**
**Pfaffenpfad 14**
**D-6701 Roedersheim-Gronau(DE)**
Erfinder: **Köhler, Gernot, Dr.**
**Berner Weg 32**
**D-6700 Ludwigshafen(DE)**
Erfinder: **Seiler, Erhard, Dr.**
**Erpolzheimer Strasse 1**
**D-6700 Ludwigshafen(DE)**
Erfinder: **Boehlke, Klaus, Dr.**
**Gerhart-Hauptmann-Strasse 53**
**D-6717 Hessheim(DE)**
Erfinder: **Brandt, Hermann, Dr.**
**Keltenstrasse 30**
**D-6707 Schifferstadt(DE)**

(54) **Thermoplastische Formmassen auf Basis von Styrolpolymerisaten und Polyphenylenethern.**

(57) Thermoplastische Formmassen auf der Grundlage von Styrolpolymerisaten (a), Polyphenylenethern (b), einem elastomeren Blockmischpolymerisat (c) vom AB, ABA, ABA' und/oder (AB)$_n$-X-Typ, in welchem A und A' polymerisierte vinylaromatische Kohlenwasserstoffblöcke sind, B hydrierte und/oder nichthydrierte von polymerisierten konjugierten Dienen abgeleitete Blöcke darstellen, X für den Rest eines multifunktionellen Kupplungsmittels steht und n eine ganze Zahl von mindestens 3 darstellt, und einem Ethylencopolymerisat (d), wobei d) aus

d$_1$) 78 bis 99,9 mol% Ethylen,
d$_2$) 0,1 bis 22 mol% mindestens eines Monomeren der allgemeinen Formel I

$$CH_2 = CR^1\text{-}COOR^2 \quad I,$$

wobei

R$^1$    C$_1$- bis C$_4$-Alkyl oder Wasserstoff und
R$^2$    C$_4$- bis C$_{18}$-Alkyl oder Cycloalkyl oder Aralkyl mit bis zu 18 C-Atomen

sind, und

d$_3$) 0 bis 10 mol% eines weiteren mit d$_1$) und d$_2$) copolymerisierbaren Monomeren

besteht.

## Thermoplastische Formmassen auf Basis von Styrolpolymerisaten und Polyphenylenethern

Die Erfindung betrifft thermoplastische Formmassen auf der Grundlage von Styrolpolymerisaten (a), Polyphenylenethern (b), einem elastomeren Blockmischpolymerisat (c) vom AB, ABA, ABA' und/oder (AB)$_n$-X-Typ, in welchem A und A' polymerisierte vinylaromatische Kohlenwasserstoffblöcke sind, B hydrierte und/oder nichthydrierte von polymerisierten konjugierten Dienen abgeleitete Blöcke darstellen, X für den Rest eines multifunktionellen Kupplungsmittels steht und n eine ganze Zahl von mindestens 3 darstellt, und einem Ethylencopolymerisat (d).

Zusätze von Blockcopolymerisaten bzw. Olefinpolymerisaten zu Mischungen aus Polyphenylenether und Styrolpolymerisaten sind an sich bekannt.

So wurden in DE-A-28 42 773 oder DD-A-202 324 zu Polyphenylenether und Styrolpolymerisat elastomere Styrolblockmischpolymere und Polyolefine gegeben. Aus EP-A-115 712, JP-A-81/51356 und DE-A-32 19 048 war es bekannt, zu Mischungen aus Polyphenylenether, Styrolpolymerisat und Blockcopolymeren auf vinylaromatischer Basis Ethylenpolymerisate oder Copolymere des Ethylens hinzuzufügen. Gemäß DE-B-30 15 514 werden Copolymerisate aus Ethylen und $C_1$-$C_{18}$-Alkyl(meth)acrylaten und Blockcopolymere gemeinsam mit Styrol gepfropft und zu Polyphenylenether und Styrolpolymerisaten zugegeben.

Jedoch sind die Schlagzähigkeit bei tiefer Temperatur, die Schmelzfließfähigkeit und die Chemikalienbeständigkeit noch unbefriedigend. Darüber hinaus lassen sich die Formmassen nur mangelhaft verstärken, z.B. mit Glasfasern. Dies äußert sich in einer unbefriedigenden Elastizität gepaart mit mangelnder Reißfestigkeit der glasfaserverstärkten Formmassen.

Copolymere des Ethylens mit Methylacrylat (EP-A-88 293) oder Ethylacrylat (DE-B-21 19 371) werden als Zusatz zu Polyphenylenether/Styrolpolymerisatmischungen zur Verbesserung der Schlagzähigkeit und der Schmelzfließfähigkeit empfohlen. Nachteilig ist hierbei die nicht ausreichende Chemikalienbeständigkeit.

Polymermischungen aus Polyphenylenethern, Styrolpolymerisaten, elastomeren Blockcopolymeren und Copolymerisaten aus Olefin mit Glycidyl(meth)acrylat wurden in EP-B-55 473 beschrieben. Der Zusatz eines Copolymerisates verbessert zwar die Verarbeitbarkeit des Gemisches, die Wärmeformbeständigkeit und die Steifigkeit werden jedoch verringert.

Mischungen aus styrolgepfropftem Polyphenylenether und styrolgepfropftem Copolymerisat aus Ethylen und $C_{1-4}$-Alkyl(meth)acrylat sind aus DE-B-27 05 657 bekannt. Diese Mischungen dürfen jedoch kein Polyphenylenether-Homopolymerisat enthalten.

Aufgabe der vorliegenden Erfindung war es daher, in einfacher Weise herstellbare, gut verarbeitbare thermoplastische Formmassen auf der Grundlage von Styrolpolymerisaten und Polyphenylenethern bereitzustellen, die bei hoher Tieftemperaturschlagzähigkeit eine gute Chemikalienbeständigkeit und Verstärkbarkeit aufweisen.

Demgemäß wurden thermoplastische Formmassen auf der Grundlage von Styrolpolymerisaten (a), Polyphenylenethern (b), einem elastomeren Blockmischpolymerisat (c) vom AB, ABA, ABA' und/oder (AB)$_n$-X-Typ, in welchem A und A' polymerisierte vinylaromatische Kohlenwasserstoffblöcke sind, B hydrierte und/oder nichthydrierte von polymerisierten konjugierten Dienen abgeleitete Blöcke darstellen, X für den Rest eines multifunktionellen Kupplungsmittels steht und n eine ganze Zahl von mindestens 3 darstellt, und einem Ethylencopolymerisat (d) gefunden, die dadurch gekennzeichnet sind, daß d) aus

d$_1$) 78 bis 99,9 mol% Ethylen,

d$_2$) 0,1 bis 22 mol% mindestens eines Monomeren der allgemeinen Formel I

$$CH_2 = CR^1\text{-}COOR^2 \qquad I,$$

wobei

R$^1$    $C_1$- bis $C_4$-Alkyl oder Wasserstoff und

R$^2$    $C_4$- bis $C_{18}$-Alkyl oder Cycloalkyl oder Aralkyl mit bis zu 18 C-Atomen

sind, und

d$_3$) 0 bis 10 mol% eines weiteren mit d$_1$) und d$_2$) copolymerisierbaren Monomeren

besteht.

Außerdem wurden spezielle Ausgestaltungen der Erfindung gemäß der Unteransprüche gefunden.

Unter Formmassen sollen ungeformte Mischungen verstanden werden, die sich durch thermoplastische Verarbeitung innerhalb bestimmter Temperaturbereiche zu Formteilen oder zu Halbzeug verarbeiten lassen.

Die Formmassen können als Granulat vorliegen, sie können aber auch pulverförmig oder durch Tablettierung vorgeformt oder in Form von Platten und Bahnen vorliegen.

Die thermoplastischen Formmassen können, jeweils bezogen auf 100 Gew.-Teile der Mischung aus a), b), c) und d), gegebenenfalls schlagfest modifizierte Styrolpolymerisate (a) und Polyphenylenether (b) in weitgehend beliebigen Mengen, beispielsweise in Mengen von 5 bis 87 Gew.-Teilen Styrolpolymerisat und 10 bis 92 Gew.-Teilen Polyphenylenether enthalten. Für die Herstellung von Formteilen eignen sich insbesondere solche Formmassen, die 20 bis 75 Gew.-Teile schlagfest modifizierte Styrolpolymerisate und 20 bis 75 Gew.-Teile Polyphenylenether enthalten. Zusätzlich enthalten die erfindungsgemäßen Formmassen üblicherweise 2 bis 40, vorzugsweise 3 bis 15 Gew.-Teile eines Blockmischpolymerisates c) und 1 bis 40, bevorzugt 2 bis 15 Gew.-Teile, jeweils bezogen auf 100 Gew.-Teile der Mischung aus a), b), c) und d), des Ethylencopolymerisats d).

Unter Styrolpolymerisaten (a) im Sinne der Erfindung werden sowohl Styrolhomo- und -copolymerisate als auch schlagzäh modifizierte Styrolpolymerisate verstanden.

Die Teilchengröße der Weichkomponente sollte im Bereich von 0,2 bis 7 $\mu$m liegen. Unter mittlerer Teilchengröße ist dabei das Gewichtsmittel zu verstehen, wie es in der DE-A 30 35 648 beschrieben ist.

Als Monomere kommen dabei insbesondere Styrol in Betracht, ferner die kern- und seitenkettenalkylierten Styrole. Vorzugsweise wird jedoch Styrol allein verwendet.

Die Homopolymerisate werden dabei nach bekannten Verfahren, in Masse, Lösung oder Suspension hergestellt (vgl. Ullmann's Enzyklopädie der technischen Chemie, Bd. 19, Seite 265, Verlag Chemie, Weinheim, 1980). Die Homopolymerisate können mittlere Molekulargewichte ($\overline{M}_n$) von 1000 bis 200.000 aufweisen.

Als Monomere zur Herstellung von Copolymerisaten kommen z.B. (Meth)acrylsäure, (Meth)-acrylsäurealkylester mit 1 bis 4 C-Atomen im Alkylrest, Acrylnitril und Maleinsäureanhydrid sowie Maleinsäureimide in Betracht. Die Comonomeren sind je nach ihrer chemischen Struktur in unterschiedlichen Mengen in Styrolpolymerisaten enthalten. Entscheidend für den Gehalt an Comonomeren im Mischpolymerisat des Styrolpolymerisates ist die Mischbarkeit des Polymerisats mit Polyphenylenether. Solche Mischungsgrenzen sind bekannt und beispielsweise in der US-PS 4 360 618, 4 405 753 und in der Veröffentlichung von J.R. Fried, G.A. Hanna, Polym. Eng. Sci. 22 (1982), S. 705ff, beschrieben. Die Herstellung der Copolymeren erfolgt nach bekannten Verfahren, die beispielsweise in Ullmann's Enzyklopädie der technischen Chemie, Bd. 19, s. 273ff, Verlag Chemie, Weinheim [1980], beschrieben sind. Die Copolymerisate haben mittlere Molekulargewichte ($\overline{M}_n$) von 10.000 bis 200.000.

Die meist angewandten Verfahren zur Herstellung schlagzäh modifizierter Styrolpolymerisate sind die Polymerisation in Masse oder Lösung, wie sie beispielsweise in der US-PS 2 694 692 beschrieben sind und Verfahren zur Masse-Suspensionspolymerisation, wie sie beispielsweise in der US-PS 2 862 906 beschrieben sind. Selbstverständlich sind auch andere Verfahren anwendbar, sofern die gewünschte Teilchengröße der Kautschukphase eingestellt wird.

Als Kautschuke werden die üblicherweise für die Schlagfestmodifizierung von Styrolpolymerisaten gebräuchlichen natürlichen oder synthetischen Kautschuke eingesetzt. Geeignete Kautschuke im Sinne der Erfindung sind neben Naturkautschuk, z.B. Polybutadien, Polyisopren und Mischpolymerisate des Butadiens und/oder Isoprens mit Styrol und anderen Comonomeren, die eine Glastemperatur unter -20 °C (nach K.H. Illers und H. Breuer, Kolloidzeitschrift 176 (1961) S. 110) besitzen. Besonders eignen sich Butadien-Polymerisate mit einem 1,4-cis-Gehalt, der zwischen 25 und 99 Gew.% liegt. Es können aber auch Acrylatkautschuke, EPDM-, Polybutylen- und Polyoctenamerkautschuke eingesetzt werden.

Bei den Polyphenylenethern (b) handelt es sich um Verbindungen auf der Basis von in ortho-Position disubstituierten Polyphenylenoxiden, wobei der Ethersauerstoff der einen Einheit an den Benzolkern der benachbarten Einheit gebunden ist. Dabei sollen mindestens 50 Einheiten miteinander verknüpft sein. Die Polyether können in ortho-Stellung zum Sauerstoff Wasserstoff, Halogen, Kohlenwasserstoffe, die kein $\alpha$-ständiges tert.-Wasserstoffatom besitzen, Halogenkohlenwasserstoffe, Phenylreste und Kohlenwasserstoffoxi-Reste tragen. So kommen in Frage: Poly(2,6-dichlor-1,4-phenylen)ether, Poly(2,6-diphenyl-1,4-phenylen)ether, Poly(2,6-dimethoxy-1,4-phenylen)ether, Poly(2,6-dimethyl-1,4-phenylen)ether oder Poly(2,6-dibrom-1,4-phenylen)ether. Bevorzugterweise wird der Poly(2,6-di methyl-1,4-phenylen)ether eingesetzt. Ganz besonders bevorzugt werden Poly(2,6-dimethyl-1,4-phenylen)ether mit einer Grenzviskosität zwischen 0,40 und 0,66 dl/g (gemessen in Chloroform bei 30 °C).

Die aromatischen Polyether können durch Selbstkondensation der entsprechend einwertigen Phenole durch Einwirken von Sauerstoff in Gegenwart eines Katalysatorsystems, wie es beispielsweise in den US-Patentschriften 3 306 875, 3 956 442, 3 965 069, 3 972 851 beschrieben ist, hergestellt werden.

Bei den in der Kombinaton enthaltenen Blockcopolymerisaten (c) handelt es sich um elastomere Copolymere des Typs AB, ABA, ABA' bzw. (AB)$_n$-X. Hierin stehen A und A' für einen nichtelastomeren Polymer-Block aus der monovinylaromatischen Verbindung, B für einen elastomeren hydrierten und/oder nichthydrierten Block eines konjugierten Diens, n für eine ganze Zahl von mindestens 3 und X für den Rest eines multifunktionellen Kupplungsmittels, über den die Verzweigungen (AB) des Blockcopolymerisates chemisch miteinander verbunden sind.

Diese Verbindungen sind an sich bekannt aus der EP-B 95 098.

Monovinyl- und monovinylidenaromatische Verbindungen, die für den Aufbau der endständigen nichtelastomeren Polymerblöcke der verzweigten Blockcopolymerisate in Betracht kommen, sind beispielsweise Styrol, die seitenkettenalkylierten Styrole, wie α-Methylstyrol, und die kernsubstituierten Styrole, wie Vinyltoluol, Ethylvinylbenzol und andere. Die monovinyl- und monovinylidenaromatischen Verbindungen können auch in Mischung miteinander eingesetzt werden. Vorzugsweise wird jedoch Styrol allein verwendet.

Konjugierte Diene, die für die erfindungsgemäßen hydrierten Polymerisate insbesondere in Betracht kommen, sind beispielsweise Butadien-1,3 sowie Isopren. Diese Diene werden entweder allein oder in Mischung miteinander für die Herstellung der Blockcopolymerisate herangezogen.

Die Molekulargewichte der Blockcopolymerisate können in weiten Grenzen schwanken, jedoch werden bei sehr niedrigem Molekulargewicht unter 10.000 nur schlechte mechanische Werte für die Abmischungen erreicht, während bei sehr hohen Molekulargewichten, z.B. über 1.000.000 die Einarbeitung schwierig wird. Das Blockcopolymerisat soll vorzugsweise zwischen 35 und 50 Gew.% Vinylaromaten enthalten.

Bevorzugt sind Verbindungen des Typs $(AB)_n$-X. Gute synergistische Wirkung, insbesondere bezüglich der Fließfähigkeit, mit der Komponente d) erzielen teilhydrierte Blockcopolymere $ABA'$ mit unsymmetrischem Aufbau, wobei

- die mittleren Molekulargewichte (Zahlenmittel $\overline{M}_n$) von A und $A'$ sich um den Faktor 2 bis 20, bevorzugt 4 bis 8, unterscheiden,
- der kürzere Block A ein mittleres Molekulargewicht ($\overline{M}_n$) von 2000 bis 4000 aufweist,
- die Blöcke A und $A'$ gemeinsam 35 bis 50, bevorzugt 35 bis 40 Gew.% des Blockcopolymerisates ausmachen und
- im Block B noch 10 bis 20 Gew.% der ursprünglich vorhandenen olefinischen Doppelbindungen vorliegen.

Diese Blockcopolymerisate mit unsymmetrischem Aufbau sind aus der deutschen Patentanmeldung Nr. P 3714710.2 bekannt.

Die Blockcopolymerisate können auf an sich bekannte Art und Weise, z.B. gemäß EP-B 95 098 oder wie in der deutschen Patentanmeldung Nr. P 3714710.2 beschrieben, hergestellt werden. Üblicherweise erfolgt die Synthese durch aufeinanderfolgende Polymerisation der Monomeren in Lösung in Gegenwart eines Monolithium-Kohlenwasserstoffes als Initiator - gegebenenfalls durch anschließendes Kuppeln der erhaltenen aktiven, lebenden linearen Blockcopolymerisate mit einer multifunktionellen, reaktionsfähigen Verbindung als Kupplungsmittel - und nachfolgende selektive Hydrierung der olefinischen Doppelbindungen der erhaltenen Blockcopolymerisate.

Als Kupplungsmittel eignen sich die bekannten multifunktionellen Verbindungen, beispielsweise Polyepoxide, wie epoxidiertes Leinsamenöl, Polyisocyanate, Polyhalogenide, Polyketone, Polyanhydride, Estergruppen enthaltende Verbindungen, insbesondere Dicarbonsäureester, wie Diethyladipat, sowie polyvinylaromatische Verbindungen, insbesondere Dinvinylbenzol.

Die Hydrierung wird üblicherweise so geführt, daß die aromatischen Doppelbindungen des Blockcopolymerisates nicht angegriffen werden.

Die selektive Hydrierung kann dabei nach bekannten Methoden mit Hilfe von molekularem Wasserstoff und Katalysatoren auf Basis von Metallen oder Metallsalzen der 8. Gruppe des Periodensystems durchgeführt werden, wie es beispielsweise in der US-PS 3 113 986, der DE-AS 1 222 260, der DE-OS 2 013 263 oder der US-PS 3 700 633 beschrieben ist. Hiernach wird die selektive Hydrierung der olefinischen Doppelbindungen vorzugsweise in homogener Phase mit Katalysatoren auf Basis von Salzen, insbesondere den Carboxylaten, Enolaten oder Alkoxiden, des Nickels, Cobalts oder Eisens, die mit Metallalkylen, insbesondere Aluminiumalkylen, reduziert sind, bei Wasserstoffdrücken zwischen 1 und 100 bar und Temperaturen zwischen 25 und 150° C vorgenommen.

Die selektive Hydrierung wird im allgemeinen soweit getrieben, bis der Gehalt an olefinischen Doppelbindungen in den linearen Blockcopolymerisaten bis auf einen Restanteil von weniger als 20, bevorzugt 10 bis 20 Gew.% reduziert worden ist. Der Restanteil der olefinischen Doppelbindungen wird üblicherweise durch IR-spektroskopische Analyse bestimmt.

Als Komponente d) der Formmassen wird ein Ethylencopolymerisat eingesetzt, das aus 78 bis 99,9, bevorzugt 80 bis 99, insbesondere 85 bis 98 mol% Ethylen, 0,1 bis 22, bevorzugt 1 bis 20, insbesondere 2 bis 15 mol% eines Monomeren $d_2$) und 0 bis 10, bevorzugt 0 mol% eines weiteren Comonomeren $d_3$) besteht, wobei die mol% auf das Copolymerisat bezogen sind.

$d_2$) ist eine Verbindung der allgemeinen Formel I

$$CH_2 = CR^1\text{-}COOR^2 \qquad I,$$

in der

$R^1$     $C_2$-$C_4$-Alkyl, bevorzugt -$CH_3$, insbesondere -H und

$R^2$     $C_4$-$C_{18}$-Alkyl oder Cycloalkyl bzw. Aralkyl mit bis zu 18 C-Atomen, bevorzugt n-Butyl oder 2-Ethylhexyl sind.

Als Beispiele für $d_2$) seien n-Butylacrylat oder auch 2-Ethylhexylacrylat, daneben aber auch Lauryl- und Stearylacrylat genannt.

$d_3$) ist ein weiteres mit $d_1$) und $d_2$) copolymerisierbares Comonomer. In Frage kommen Vinylether, Vinylester, Glycidylacrylat, Maleinsäure, Fumarsäure, deren Anhydride, Imide oder Mono- oder Diester von $C_1$-$C_{12}$-Alkoholen, Butadien, Isopren oder daneben auch Styrol, mit $C_1$-$C_4$-Alkylresten kern- oder seitenkettenalkylierte Styrole oder halogensubstituierte Styrole.

Formmassen mit besonders guten Eigenschaften werden erhalten, wenn als d) ein Copolymerisat verwendet wird, das eine Dichte im Bereich von 0,900 bis 0,945 g/cm³, bevorzugt 0,915 bis 0,935 g/cm³ sowie eine Schmelzfließfähigkeit (Meltindex) zwischen 1 und 200, vorzugsweise zwischen 1,5 und 50 g/10 min, gemessen nach DIN 53 735 bei 190°C und 2,16 kg Last, aufweist.

Diese Polymerisate sind an sich bekannt und können in üblicherweise in Lösung, Suspension oder Gasphase gemäß Ullmanns Encyclopädie der techn. Chemie, Bd. 19 (1980) S. 167ff hergestellt werden. Die Polymerisate können mit Vorteil nach dem in der EP-A-131 707 beschriebenen Verfahren durch radikalisch initiierte Polymerisation bei 50 bis 450°C und 350 bis 5000 bar in Rohrreaktoren oder Autoklaven hergestellt werden.

Die Mischungen aus den schlagzäh modifizierten Styrolpolymerisaten, Polyphenylenethern und der Kombination aus einem elastomeren Blockmischpolymeren und einem acrylgruppenhaltigen Polymeren können außerdem weitere Zusatzstoffe wie Pigmente, Farbstoffe, Füllstoffe, Flammschutzmittel, weitere verträgliche Polymere, Antistatika, Antioxidantien, Schmiermittel und Metallflocken enthalten. Als verstärkende Füllstoffe können bekannte Glasfasern, z.B. aus E-Glas, die üblicherweise eine Länge von 0,1 bis 10 mm bei einem Durchmesser von etwa 6 bis 20 μm haben, verwendet werden.

Man stellt die erfindungsgemäßen thermoplastischen Formmassen wie üblich auf Vorrichtungen, die ein homogenes Mischen zulassen, wie Knetern, Extrudern oder Walzenmischgeräten her.

Die erfindungsgemäßen Formmassen zeichnen sich durch ihre einfache Herstellbarkeit und ein ausgewogenes Eigenschaftsniveau aus vorteilhaften mechanischen Eigenschaften aus. Insbesondere werden hohe Schlagzähigkeit bei tiefer Temperatur, guter Fließfähigkeit, Verarbeitbarkeit, Chemikalienbeständigkeit und Thermostabilität erzielt. Gleichzeitig haften die Formmassen gut an Glasfasern, so daß sich die erfindungsgemäßen Formmassen zu glasfaserverstärkten Produkten mit vorteilhafter Steifigkeit verarbeiten lassen.

Beispiele 1 bis 11 und Vergleichsversuche 1* bis 10*

Folgende Komponenten wurden zur Herstellung der Formmassen verwendet:

Komponente (a)

a1: Schlagfestes Polystyrol mit einer mittleren Teilchengröße (Gewichtsmittel) von 0,5 μm und einem Polybutadien-Anteil von 8 Gew.%, hergestellt gemäß DE-A 30 35 648.

a2: Schlagfestes Polystyrol mit einer mittleren Teilchengröße (Gewichtsmittel) von 6,4 μm und einem Polybutadien-Anteil von 9 Gew.%, hergestellt gemäß DE-A 30 35 648.

a3: Polystyrol mit einem Molekulargewicht ($\overline{M}_n$) von 150.000.

Komponente b)

b: Poly(2,6-dimethyl-1,4-phenylen)ether mit einer Grenzviskosität von 0,63 (gemessen in Chloroform bei 30°C).

Komponente c)

c1: Blockmischpolymerisat ABA aus einem hydrierten Butadienblock B und Styrolblöcken A mit einem mittleren Gesamtmolekulargewicht von 73 000, wobei die Styrolblöcke je ein mittleres Molekulargewicht von 11 000 aufweisen, ihr Gehalt am Blockmischpolymerisat 30 Gew.% ausmacht und der Restdoppelbindungsgehalt 2 Gew.% der ursprünglich vorhandenen olefinischen Doppelbindungen beträgt. Die Glastemperatur von c1 beträgt -51°C.

c2: Unsymmetrisch aufgebautes Blockmischpolymerisat ABA′ aus einem hydrierten Polybutadienblock B und Styrolblöcken A und A′ mit einen mittleren Gesamtmolekulargewicht von 67 000, wobei die mittleren Molekulargewichte ($\overline{M}_n$) von A bzw A′ 3 800 und A′ 20 000 sind, ihr Gehalt am Blockmischpolymerisat 36 Gew.% ausmacht und der Restdoppelbindungsgehalt von B 14 Gew.% der ursprünglich vorhandenen olefinischen Doppelbindungen beträgt, hergestellt gemäß der deutschen Patentanmeldung P 37 14 710.2. Die Glastemperatur von c2 beträgt -57°C.

c3: Sternblockcopolymeres vom $(AB)_n$-X-Typ mit Polystyrolblöcken A von zusammen 31 Gew.% und einem mittleren Molekulargewicht der Blockäste von 14 000, einem zentralen Kopplungsteil X, der sich vom Siliziumtetrachlorid ableitet und Blöcken B, die aus Polybutadien bestehen und noch 3 Gew.% der ursprünglich vorhandenen olefinischen Doppelbindungen enthält. Die Glastemperatur von c3 beträgt -65°C.

c4: Zweiblockcopolymerisat AB mit einem mittleren Molekulargewicht von 107 000 mit einem Polystyrolblock A von 36 Gew.% und einem hydrierten Polyisoprenblock (Shellvis® 50, ® = eingetragenes Warenzeichen der Shell AG).

Komponente d)

d1: Copolymerisat aus 89 mol% Ethylen und 11 mol% n-Butylacrylat mit einer Dichte von 0,928 g/cm³ gemessen nach DIN 53 479 und einem Meltindex (190/2,16) von 8,3 g/10 min.

d2: Copolymerisat aus 93 mol% Ethylen und 7 mol% n-Butylacrylat mit einer Dichte von 0,926 g/cm³ gemessen nach DIN 53 479 und einem Meltindex (190/2,16) von 4,8 g/10 min.

d3: Copolymerisat aus 97 mol% Ethylen und 3 mol% n-Butylacrylat mit einer Dichte von 0,924 g/cm³ gemessen nach DIN 53 479 und einem Meltindex (190/2,16) von 1,8 g/10 min.

Für nicht erfindungsgemäße Formmassen wurden folgende Komponenten verwendet:

b(V): Polyphenylenether, gepfropft mit Polystyrol, hergestellt gemäß DE-B-30 15 514, Spalte 12, Z. 46-56 aus 100 Gew.-Teilen b und 115 Gew.-Teilen a3.

d(1V): Copolymerisat aus 97,8 Mol% Ethylen und 2,2 Mol% Octen-1.

d(2V): Polyethylen AC1702 der Fa. Allied Chem. Co.

d(3V): Pfropfpolymerisat, hergestellt aus einem Gemisch aus 67 Gew.-Teilen c1 und 33 Gew.-Teilen d1, das mit 35 Gew.-Teilen Styrol gemäß DE-B-30 15 514, Spalte 12, Zeilen 33 bis 45 gepfropft wurde.

d(4V): Polyethylen.

d(5V): Copolymerisat aus 94 mol% Ethylen und 6 mol% Ethylacrylat.

Als Verstärkungsmittel wurden Glasfasern aus E-Glas (Länge: 4,5 mm, Durchmesser: 10 μm), Typ OCF 429 der Fa. Owens Cornings Fibreglass verwendet.

Die in Tabelle 1 angegebenen Mengen der Komponenten wurden mit jeweils 0,08 kg Tris(nonylphenyl)-phosphit und 0,15 kg eines Polyethylenwachses mit einer Schmelzviskosität von 1300 cSt gemessen bei 120°C auf einem Zweiwellenextruder bei 280°C aufgeschmolzen, homogenisiert, gemischt und granuliert.

Aus den Mischungen wurden mittels einer Spritzgußmaschine bei 280°C Prüfkörper hergestellt. Die Ergebnisse der Prüfungen sind in der Tabelle zusammengestellt.

Die Prüfungen gemäß Tabelle 2 wurden wie folgt durchgeführt:

Der Elastizitätsmodul wurde nach DIN 53 457 und die Reißfestigkeit nach DIN 53 455 bestimmt.

Die Kerbschlagzähigkeit wurde nach DIN 53 443 und die Durchstoßarbeit nach DIN 53 443, Blatt 2,

6

jeweils bei -40°C gemessen.

Der Schmelzindex wurde nach DIN 53 735 bei 250°C und 21,6 kg Last bestimmt.

Die Chemikalienbeständigkeit wurde an Spritzkästchen untersucht. Sie wurden mit Isopropanol gefüllt und nach 48 Stunden Lagerung bei Raumtemperatur visuell beurteilt.

Note 1: keine Veränderungen

Note 2: Oberflächenaufrauhungen, Trübungen

Note 3: Verformungen

Tabelle 1

| Beispiel | Vergleichsversuch | Komponenten, Mengenangaben in kg | | | | Glasfasern |
|---|---|---|---|---|---|---|
| | | (a) | (b) | (c) | (d) | |
| 1 | | a1 6,6 | b 2,4 | c1 0,5 | d2 0,5 | |
| 2 | | a2 6,6 | b 2,4 | c3 0,5 | d3 0,5 | |
| | 1* | a1 6,6 | b 2,4 | c1 0,5 | d(5V) 0,5 | |
| | 2* | a2 6,6 | b 2,4 | | d3 0,5 | |
| 3 | | a1 4,95 | b 4,05 | c3 0,5 | d1 0,5 | |
| 4 | | a2 4,95 | b 4,05 | c1 0,5 | d2 0,5 | |
| | 3* | a1 4,95 | b 4,05 | c3 0,5 | d(1V) 0,5 | |
| | 4* | a1 4,95 | b 4,05 | c1 0,5 | d(5V) 0,5 | |
| 5 | | a1 1,9 | b 7,4 | c2 0,4 | d2 0,3 | |
| | 5* | a1 1,9 | b 7,4 | c1 0,4 | d(2V) 0,3 | |
| 6 | | a1 3,1 | b 5,5 | c2 0,7 | d1 0,7 | |
| | 6* | a1 3,1 | b 5,5 | c4 0,7 | d(4V) 0,7 | |
| 7 | | a3 4,9 | b 3,8 | c1 0,4 | d1 0,9 | |
| | 7* | | b(V) 8,2 | | d(3V) 1,8 | |
| 8 | | a1 4,5 | b 4,5 | c1 0,5 | d2 0,5 | 4,0 |
| | 8* | a1 4,5 | b 4,5 | c1 0,5 | d(5V) 0,5 | 4,0 |
| 9 | | a1 2,5 | b 6,8 | c2 0,4 | d2 0,3 | 4,0 |
| | 9* | a1 2,5 | b 6,8 | c1 0,4 | d(2V) 0,3 | 4,0 |
| 10 | | a2 3,5 | b 5,1 | c3 0,7 | d2 0,7 | 4,0 |
| | 10* | a2 3,5 | b 5,1 | c4 0,7 | d(4V) 0,7 | 4,0 |
| 11 | | a3 4,9 | b 3,8 | c1 0,4 | d1 0,9 | 4,0 |
| | 11* | | b(V) 8,2 | | d(3V) 1,8 | 4,0 |

Tabelle 2

| Beisp. | Vergl.vers. | Kerbschlagzähigkeit [kJ/m²] | Durchstoßarbeit [Nm] | Schmelzindex [g/10 min] | E-Modul [N/mm²] | Reißfestigkeit [N/mm²] | Chemikalienbeständigkeit |
|---|---|---|---|---|---|---|---|
| 1 | | 16 | 38 | 90 | | | 1 |
| 2 | | 15 | 32 | 97 | | | 1 |
| | 1* | 13 | 29 | 90 | | | 2 |
| | 2* | 8 | 11 | 106 | | | 3 |
| 3 | | 24 | 34 | 60 | | | 1 |
| 4 | | 22 | 36 | 63 | | | 1 |
| | 3* | 19 | 28 | 51 | | | 2 |
| | 4* | 20 | 30 | 54 | | | 2 |
| 5 | | 20 | 45 | 35 | | | 1 |
| | 5* | 14 | 40 | 30 | | | 3 |
| 6 | | 22 | 47 | 33 | | | 1 |
| | 6* | 10 | 25 | 30 | | | 2 |
| 7 | | 22 | 41 | 35 | | | 1 |
| | 7* | 15 | 37 | 30 | | | 2 |
| 8 | | 8 | 2 | 6 | 9050 | 110 | 1 |
| | 8* | 6 | 1,8 | 5 | 8700 | 100 | 2 |
| 9 | | 9 | 3 | 4 | 9600 | 105 | 1 |
| | 9* | 5 | 2 | 3 | 9000 | 78 | 3 |
| 10 | | 8 | 4 | 5 | 9100 | 115 | 1 |
| | 10* | 3 | 2 | 4 | 8500 | 73 | 2 |
| 11 | | 8 | 5 | 3 | 8500 | 105 | 1 |
| | 11* | 3 | 2 | 3 | 7200 | 84 | 2 |

**Ansprüche**

1. Thermoplastische Formmassen auf der Grundlage von Styrolpolymerisaten (a), Polyphenylenethern (b), einem elastomeren Blockmischpolymerisat (c) vom AB, ABA, ABA' und/oder (AB)$_n$-X-Typ, in welchem A und A' polymerisierte vinylaromatische Kohlenwasserstoffblöcke sind, B hydrierte und/oder nichthydrierte von polymerisierten konjugierten Dienen abgeleitete Blöcke darstellen, X für den Rest eines multifunktionellen Kupplungsmittels steht und n eine ganze Zahl von mindestens 3 darstellt, und einem Ethylencopolymerisat (d), dadurch gekennzeichnet, daß d) aus

$d_1$) 78 bis 99,9 mol% Ethylen,
$d_2$) 0,1 bis 22 mol% mindestens eines Monomeren der allgemeinen
$d_2$)
Formel I

$$CH_2 = CR^1\text{-}COOR^2 \qquad I,$$

wobei

$R^1$     C$_1$- bis C$_4$-Alkyl oder Wasserstoff und
$R^2$     C$_4$- bis C$_{18}$-Alkyl oder Cycloalkyl oder Aralkyl mit bis zu 18 C-Atomen

sind, und
$d_3$) 0 bis 10 mol% eines weiteren mit $d_1$) und $d_2$) copolymerisierbaren Monomeren besteht.

2. Thermoplastische Formmassen nach Anspruch 1, dadurch gekennzeichnet, daß d) ein Polymerisat aus

80 bis 99 mol.% $d_1$),
1 bis 20 mol.% $d_2$) und
bis zu 10 mol.% $d_3$) ist.

3. Thermoplastische Formmassen nach den Ansprüchen 1 und 2, dadurch gekennzeichnet, daß d) ein Polymerisat aus

85 bis 98 mol.% $d_1$),
2 bis 15 mol.% $d_2$) ist.

4. Thermoplastische Formmassen nach den Ansprüchen 1 bis 3, dadurch gekennzeichnet, daß $d_2$) mindestens ein C$_4$- bis C$_8$-Alkylacrylat ist.

5. Thermoplastische Formmassen nach den Ansprüchen 1 bis 4, dadurch gekennzeichnet, daß d) eine Dichte im Bereich von 0,900 bis 0,945 g/cm$^3$ sowie eine Schmelzfließfähigkeit zwischen 1 und 200 g/10 min aufweist.

6. Thermoplastische Formmassen nach den Ansprüchen 1 bis 5, dadurch gekennzeichnet, daß c) ein teilhydriertes Blockcopolymer ABA' mit unsymmetrischem Aufbau, wobei

- die mittleren Molekulargewichte von A und A' sich um den Faktor 2 bis 20 unterscheiden,
- der kürzere Block A ein mittleres Molekulargewicht von 2000 bis 4000 aufweist,
- die Blöcke A und A' gemeinsam 35 bis 50 Gew.% des Blockcopolymerisates ausmachen und
- im Block B weniger als 20 Gew.% der ursprünglich vorhandenen olefinischen Doppelbindungen vorliegen,

ist.

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int. Cl.4) |
|---|---|---|---|
| X | PATENT ABSTRACTS OF JAPAN, Band 7, Nr. 69 (C-158)[1214], 23. März 1983; & JP-A-58 5356 (ENJINIARINGU PLASTIC K.K.) 12-01-1983 * Insgesamt * --- | 1-6 | C 08 L 71/04 C 08 L 23/08 C 08 L 25/00 C 08 L 53/02 |
| X | EP-A-0 229 498 (SUMITOMO) * Ansprüche; Seite 4, Zeilen 54-57; Seite 5, Zeilen 1-5 * --- | 1-6 | |
| A | PATENT ABSTRACTS OF JAPAN, Band 11, Nr. 139 (C-420)[2586], 7. Mai 1987; & JP-A-61 278 560 (MITSUBISHI PETROCHEM CO. LTD) 09-12-1986 * Zusammenfassung * --- | 1-6 | |
| A | PATENT ABSTRACTS OF JAPAN, Band 10, Nr. 310 (C-379)[2366], 22. Oktober 1986; & JP-A-61 123 612 (MITSUBISHI PETROCHEM CO. LTD) 11-06-1986 * Zusammenfassung * ----- | 1-6 | RECHERCHIERTE SACHGEBIETE (Int. Cl.4) C 08 L |

Der vorliegende Recherchenbericht wurde für alle Patentansprüche erstellt

| Recherchenort | Abschlußdatum der Recherche | Prüfer |
|---|---|---|
| DEN HAAG | 22-11-1988 | DERAEDT G. |